(19) Europäisches Patentamt
European Patent Office
Office européen des brevets

(11) **EP 2 805 862 B1**

(12) **EUROPEAN PATENT SPECIFICATION**

(45) Date of publication and mention
of the grant of the patent:
**06.04.2016 Bulletin 2016/14**

(51) Int Cl.:
***B61C 7/04*** (2006.01)

(21) Application number: **14164437.7**

(22) Date of filing: **11.04.2014**

(54) **Traction system for railway vehicles and railway vehicles where the system is equipped**

Antriebssystem für Schienenfahrzeuge und Schienenfahrzeuge, womit das System ausgestattet ist

Système de traction pour véhicules sur rails et véhicules ferroviaires où le système est équipé

(84) Designated Contracting States:
**DE GB**

(30) Priority: **26.04.2013 JP 2013093181**

(43) Date of publication of application:
**26.11.2014 Bulletin 2014/48**

(73) Proprietor: **Hitachi, Ltd.**
**Tokyo 100-8280 (JP)**

(72) Inventors:
• **Shimada, Motomi**
**Chiyoda-ku, Tokyo 100-8280 (JP)**

• **Inarida, Satoru**
**Chiyoda-ku, Tokyo 100-8280 (JP)**
• **Mochizuki, Kento**
**Chiyoda-ku, Tokyo 100-8280 (JP)**
• **Agatsuma, Koji**
**Chiyoda-ku, Tokyo 100-8280 (JP)**

(74) Representative: **Gill, Stephen Charles et al**
**Mewburn Ellis LLP**
**City Tower**
**40 Basinghall Street**
**London EC2V 5DE (GB)**

(56) References cited:
**EP-A2- 2 256 013     WO-A1-2008/137240**

**Description**

BACKGROUND OF THE INVENTION

Field of the Invention

The present invention relates to a traction system for railway vehicles equipped with a traction system using engine power generation, and more particularly to techniques for coolant pre-heating and warm-up operation at the time of engine start-up.

Description of the Related Art

A power source is indispensable for traction of railway vehicles, and it is important that, during operation of the vehicles, power for traction of the vehicles is generated from the power source so as to normally operate a drive system for rotating wheels. Railway vehicles are generally classified into the following two types.

(1) An electric railcar which, when traveling on an electrified line, receives power supply from a power generation facility on the ground side through a power supply facility, such as an overhead line, so as to drive wheels.
(2) A diesel railcar which has an engine, or the like, mounted thereto and which is capable of travelling by itself when travelling on a non-electrified line.

When an electric railcar travels on an electrified line, or the like, which is equipped with a power source, such as a power generation facility, on the ground side, the traction of the electric railcar is performed in such a manner that electric power supplied from a power supply facility, such as an overhead line, is taken into the electric railcar, and that an electric motor is driven by a power converter, or the like, so as to generate tractive force between the wheels and the rail tracks (Electric Multiple Unit).
On the other hand, when a diesel railcar travels on a non-electrified line, or the like, which is not equipped with a power source, such as a power generation facility, or the like, on the ground side, the traction of the diesel railcar is performed in such a manner that electric power is generated by driving a generator by using, as a power source, an engine mounted on the railcar, and that an electric motor is driven by a power converter, or the like, so as to generate tractive force between the wheels and the rail tracks (Diesel Electric Multiple Unit). Alternatively, in a railcar using an engine as a power source, there is also a system which performs traction of the railcar in such a manner that the shaft output of the engine is controlled by a transmission, and the like, to directly drive wheels, and thereby tractive force is generated between the wheels and the rail tracks (Diesel Multiple Unit).
Usually, it is common that an electric railcar is operated in an electrified section, and that a diesel railcar is operated in a non-electrified section. There is also an example in which a diesel railcar is used in an electrified section. However, from the viewpoint of effective use of facilities, it is not efficient that, while additionally consuming fuel, a diesel railcar travels on an electrified section equipped with a power generation facility on the ground side. However, there is also a case where, from the viewpoint of passenger service, it is desirable that a same train set is operated to directly travel through an electrified section and a non-electrified section. As an example of a configuration of a train provided with facilities necessary for directly traveling through an electrified section and a non-electrified section, a "traction system of railway vehicles" is disclosed in Japanese Patent Laid-Open Publication No. 2010-88145.
Meanwhile, a diesel engine is generally mounted to a diesel railcar regardless of the electric type and the mechanical type. When a diesel engine is started in cold condition, there is a case where pre-heating or warm-up operation for heating coolant beforehand is required for the purpose of improving ignition in the engine and protecting sliding components, and the like. Particularly, in a high-output engine having a large body size, it is common that the coolant pre-heating conditions and the warm-up conditions at the time of starting the engine are specified in detail.
An example of a configuration, in which, in order to maintain ignition in an engine in winter, the engine is kept warm by using an electric heater, is described in Japanese Patent Laid-Open Publication No. 8-198102 disclosing a control system of a diesel railcar.

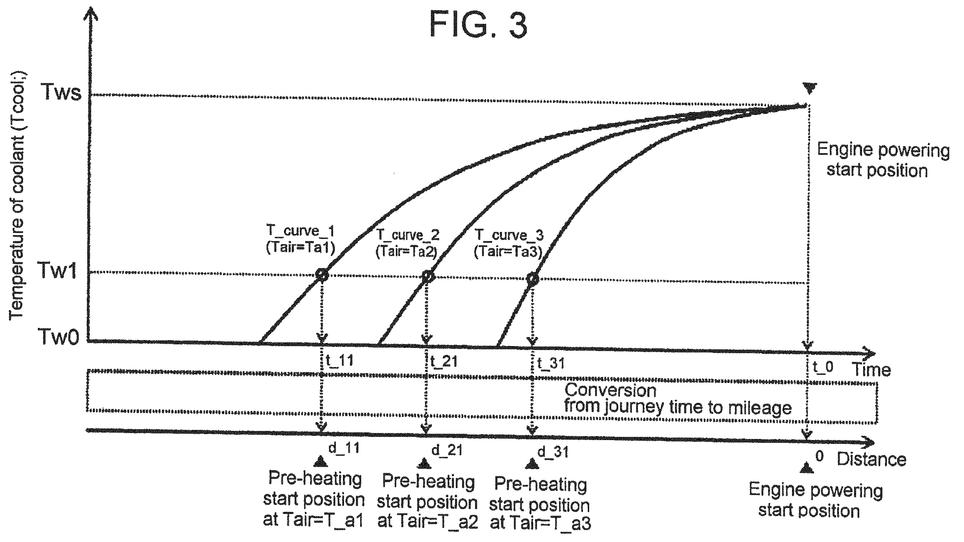

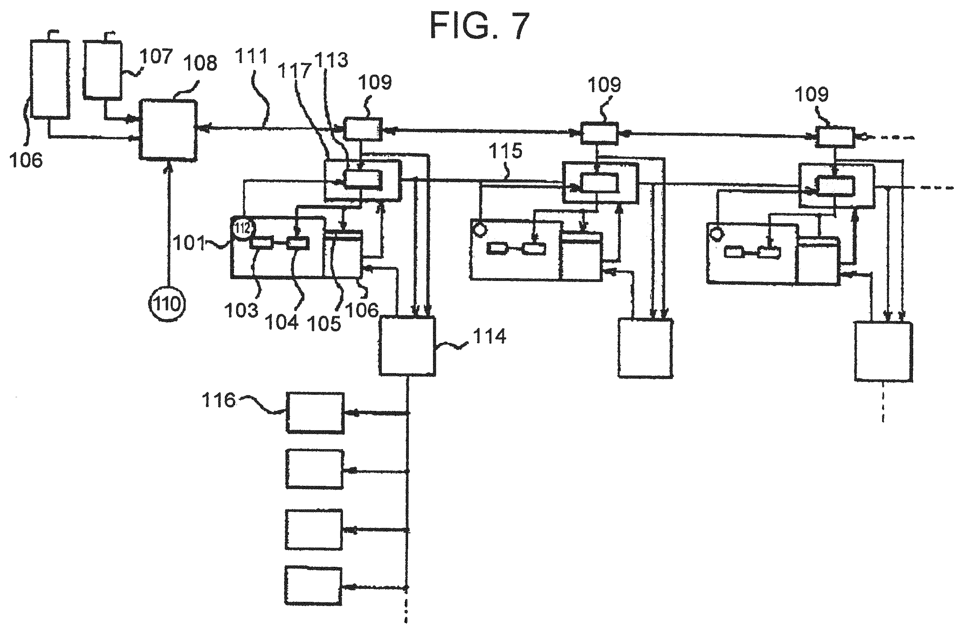

FIG. 7 shows a speed control system diagram of a control system of a diesel railcar, which is shown as FIG. 3 in Japanese Patent Laid-Open Publication No. 8-198102. Reference numeral 106 denotes an engine control master controller, and reference numeral 107 denotes a torque conversion controller. Reference numeral 108 denotes an integrated controller, and reference numeral 109 denotes a distributed controller. Reference numeral 110 denotes a tachometer generator, and reference numeral 111 denotes an optical fiber cable. Reference numeral 112 denotes an engine sensor, and reference numeral 113 denotes a main circuit control ST. Reference numeral 114 denotes a motor controller, and reference numeral 115 denotes a power cable. Reference numeral 116 denotes a main motor, and reference numeral 117 denotes a main circuit controller. In Japanese Patent Laid-Open Publication No. 8-198102, it is described that, in this configuration, since the power cable 115 is extended over all the train, each of the engines can be kept warm as needed by an electric heater that is attached to each of the engines and receives electric power from the power cable 115, and hence it is also not necessary to newly lay a power cable. It is also described that, when the train is stopped, an external power source is connected to the power cable of the train, and thereby the engines can be kept warm so as not to be frozen, and hence the engines need not be continuously operated during night time for being kept warm.

As described above, the coolant pre-heating conditions and the warm-up conditions at the time of starting a high-output engine in cold condition are generally specified in detail.

The pre-heating of coolant is usually performed by a dedicated heater attached to an engine cooling system. Further, the engine warm-up operation is generally performed by a method in which, after the coolant is pre-heated to a predetermined temperature, idling operation is performed so that no power is outputted to the outside of the engine.

In the case of a diesel railcar, it is necessary that, after completion of the coolant pre-heating and the warm-up operation, the diesel railcar starts to be operated according to a schedule of the day. For this reason, the coolant pre-heating and the warm-up operation are performed in a car depot so as to be completed before the start of the operation of the diesel railcar. Particularly in a cold district, the coolant pre-heating and the warm-up operation take much time. Therefore, in many cases, after completion of the operation of the day, the warm-up operation is continued until the start of operation on the next day, so as to prevent the temperature of the coolant from being lowered. In this way, it is necessary that the coolant pre-heating and the warm-up operation are started at the time preceding the start of next operation by a time calculated in consideration of the air temperature in the district and the temperature of the coolant.

Meanwhile, in the case of the train which directly travels through the electrified section and the non-electrified section as described above, the train can travel in the electrified section by receiving electric power from the overhead line, and then can travel in the non-electrified section by using engine power. In this case, it is possible to consider a method in which the coolant pre-heating and the warm-up operation are completed at the time when the train leaves the car depot, and thereafter the coolant temperature is maintained by the idling operation during the traveling in the electrified section, and in which, when the train enters the non-electrified section, the operation based on the electric power supply is switched to the operation based on the engine power. However, in this method, since the engine continues the idling operation with no external output during the traveling in the electrified section, not only the fuel is uselessly consumed only for compensating for the energy dissipated from the coolant, but also engine noise may cause a problem.

Further, it is also possible to consider a method in which the coolant pre-heating is completed at the time when the train leaves the car depot, and thereafter the coolant temperature is maintained by using a coolant pre-heating heater during the traveling in the electrified section. However, also in this method, energy is uselessly consumed during the traveling in the electrified section. Therefore, from the viewpoint of energy saving, it is difficult to say that this method is desirable.

An object of the present invention is to provide an energy-saving traction system for railway vehicles, the system being configured to be used in a railway vehicle directly traveling through a section, such as an electrified section, in which the traction of the vehicle is performed without use of engine output, and a section, such as a non-electrified section, in which the traction of the vehicle is performed by use of engine output, and configured to be able to reduce the amount of consumption of energy used for increasing the coolant temperature to a temperature required when the railway vehicle enters the non-electrified section.

SUMMARY OF THE INVENTION

According to the present invention, there is provided a traction system for railway vehicles, the traction system being configured to include an engine, an engine cooling system for cooling the engine, a coolant heating system for heating coolant flowing through the engine cooling system, a coolant temperature sensor for detecting the temperature of the coolant flowing through the engine cooling system, and a power converter for supplying AC power to a motor for vehicle traction by using, as a power source, a ground side power supply facility, or an electric power storage system mounted to the vehicle, or a generator driven by the engine, and configured to enable the railway vehicle to travel through a section in which the traction of the vehicle is performed without use of engine output and a section in which traction of the vehicle is performed by use of engine output, the traction system including a travel position detector for detecting travel position information of the railway vehicle, a control unit for instructing the start of heating by the coolant heating system, and an information storage unit for storing, for each route, point information or time information for the start of engine operation with external output, wherein, when the railway vehicle travels the section in which the traction of the vehicle is performed without use of output of the engine, the control unit starts the heating by the coolant heating system, and the point or the time, at which the heating by the coolant heating system is started, is changed according to coolant temperature so that, at the point or the time at which the engine starts operation with external output, the coolant temperature reaches a temperature that enables the engine to perform the operation with external output.

With the effect of the present invention, it is possible to provide a traction system for railway vehicles, in which system the temperature of coolant can reach a temperature required when the railway vehicle enters a point where the engine starts operation with external output, and in which the energy consumption used for pre-heating the coolant can be reduced.

BRIEF DESCRIPTION OF THE DRAWINGS

FIG. 1 is a view showing a basic configuration of an embodiment of a traction system for railway vehicles according to the present invention;
FIG. 2 is a view showing a system configuration of a traction system and a train control and management system according to the embodiment of the present invention;
FIG. 3 is a view showing an example of a coolant pre-heating curve according to the embodiment of the present invention;
FIG. 4 is a view showing an example of an operation curve for determining a coolant pre-heating start point according to the embodiment of the present invention;
FIG. 5 is a control block diagram showing a procedure for calculating a coolant pre-heating command according to the embodiment of the present invention;
FIG. 6 is a view showing operation of a coolant temperature rise acceleration function which is a second embodiment of the present invention;
FIG. 7 is a speed control system diagram of a control system of a diesel railcar shown in FIG. 3 of Japanese Patent Laid-Open Publication No. 8-198102;
FIG. 8 is a view showing a system configuration of a traction system and a train control and management system according to another embodiment of the present invention; and
FIG. 9 is a view showing an example of a coolant pre-heating curve according to another embodiment of the present invention.

DETAILED DESCRIPTION OF THE PREFERRED EMBODIMENTS

In the following, embodiments according to the present invention will be described with reference to the accompanying drawings.

[Embodiment 1]

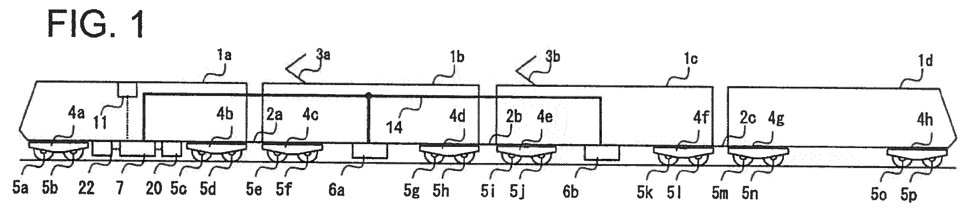

FIG. 1 is a view showing a basic configuration of an embodiment of a traction system for railway vehicles according to the present invention.
Vehicles 1 a, 1 b, 1 c and 1 d are vehicles which configure a train set or a part of a train set. The vehicle 1 a and the vehicle 1 b are connected with each other by an intermediate coupler 2a. Similarly, the vehicle 1 b and the vehicle 1 b are connected with each other by an intermediate coupler 2b, and the vehicle 1 c and the vehicle 1 d are connected with each other by an intermediate coupler 2c.
The vehicle 1 a is supported on a rail surface (not shown) by wheel sets 5a and 5b via a truck 4a and by wheel sets 5c and 5d via a truck 4b. The vehicle 1 b is supported on a rail surface (not shown) by wheel sets 5e and 5f via a truck 4c and by wheel sets 5g and 5h via a truck 4d. The vehicle 1 c is supported on a rail surface (not shown) by wheel sets 5i and 5j via a truck 4e and by wheel sets 5k and 51 via a truck 4f. The vehicle 1 d is supported on a rail surface (not shown) by wheel sets 5m and 5n via a truck 4g and by wheel sets 5o and 5p via a truck 4h.
A train control and management system 7, an outside air temperature sensor 11, a travel position detector 22, and a travel speed sensor 20 are mounted to the vehicle 1 a. Further, the train control and management system 7 is connected, via an information transmission system 14, to a traction system 6a mounted to the vehicle 1 b and described below, and to a traction system 6b mounted to the vehicle 1c and described below. At least a coolant pre-heating command Cmd_prht_a and an engine power generation control command Cmd_egen_a are transmitted from the train control and management system 7 to the traction system 6a via the information transmission system 14. The train control and management system 7 receives at least a coolant temperature detection value Tcool_a from the traction system 6a. Similarly, at least a coolant pre-heating command Cmd_prht_b and an engine power generation control command Cmd_egen_b are transmitted from the train control and management system 7 to the traction system 6b via the information transmission system 14. The train control and management system 7 receives at least a coolant temperature detection value Tcool_b from the traction system 6b. Further, the train control and management system 7 receives an ambient outside air temperature Tair of the vehicle 1 a from the outside air temperature sensor 11, point passage information Chk_position of the vehicle 1 a from the travel position detector 22, and travel speed information Vtrain_a of the vehicle 1 a from the travel speed sensor 20.

The traction system 6a is mounted to the vehicle 1 b. As described above, the traction system 6a is connected, via the information transmission system 14, to the train control and management system 7 mounted to the vehicle 1 a.

The traction system 6b is mounted to the vehicle 1 c. As described above, the traction system 6b is connected, via the information transmission system 14, to the train control and management system 7 mounted to the vehicle 1 a.

Meanwhile, in the present embodiment, there is shown a four-car train set which is configured by the vehicles 1 a, 1 b, 1 c and 1 d and configured such that the train control and management system 7, the outside air temperature sensor 11, the travel position detector 22, and the travel speed sensor 20 are mounted to the vehicles 1 a, such that the traction system 6a is mounted to the vehicle 1 b, and such that the traction system 6b is mounted to the vehicles 1 c. However, the present embodiment does not limit the number of vehicles configuring a train set and does not limit the contents of apparatuses and systems mounted to each of the vehicles.

For example, it can also be considered that a traction system 6 is mounted to the vehicle 1 a in addition to the train control and management system 7, the outside air temperature sensor 11, the travel position detector 22, and the travel speed sensor 20. Also in this case, the traction system 6 and the train control and management system 7 are connected to each other via the information transmission system 14. Further, it is not necessary that the train control and management system 7, the outside air temperature sensor 11, the travel position detector 22, and the travel speed sensor 20, which are mounted to the vehicle 1 a, are mounted to one vehicle in a concentrated manner, and a configuration can also be considered in which the train control and management system 7, the outside air temperature sensor 11, the travel position detector 22, and the travel speed sensor 20 are mounted in the vehicles 1 b and 1 c in a distributed manner. Also in this case, each of the traction systems 6a and 6b is connected, via the information transmission system 14 in each of the vehicles 1 b and 1 c, to each of the train control and management systems 7 arranged in the vehicles 1 b and 1 c in the distributed manner.

Further, as the travel position detector 22, it is possible to use on-vehicle information receiving means of a ground-vehicle information transmission system, which is used for a security control system, such as ATS (Automatic Train Stop), ATC (Automatic Train Control), and ETCS (European Train Control System). Thereby, the point passage information is obtained, so that the vehicle travel position is corrected by using the vehicle speed obtained from the travel speed sensor 20. Further, as other means to realize the travel position detector 22 used for obtaining the point passage information, a method can also be considered in which a vehicle travel point is periodically acquired by a GPS (Global Positioning System), and the vehicle travel point is corrected by using route information stored in the train control and management system 7, and using the vehicle speed obtained by the travel speed sensor 20.

With the above-described configuration, the train control and management system 7 collates the point passage information Chk_position detected by the travel position detector 22, with the route information stored in an information storage unit 13 provided in the train control and management system. Thereby, the train control and management system 7 can specify the point corresponding to the point passage information Chk_position, and further can specify the current travel position P_current by adding, to the specified point, the time integration value of the travel speed Vtrain detected by the travel speed sensor 20.

Further, on the basis of the ambient outside air temperature Tair detected by the outside air temperature sensor 11, and coolant temperature detection values Tcool_a and Tcool_b of engine coolant, which are detected by the traction systems 6a and 6b and transmitted via the information transmission system 14, the train control and management system 7 determines coolant pre-heating required times T_prht_a and T_prht_a, during each of which the engine coolant of each of the traction systems 6a and 6b is heated by each of the coolant pre-heating systems to reach a predetermined temperature. Further, a point, at which the coolant pre-heating is to be completed, is registered beforehand in the information storage unit 13, and the train control and management system 7 determines coolant pre-heating start points P_prht_a and P_prht_b, each of which enables the coolant pre-heating required time to be secured. When the current travel position P_current reaches each of the coolant pre-heating start points P_prht_a and P_prht_b, the train control and management system 7 outputs each of coolant pre-heating commands Cmd_prht a and Cmd_prht_b to each of the traction systems 6a and 6b. Upon reception of the coolant pre-heating commands Cmd_prht_a and Cmd_prht_b, the traction systems 6a and 6b operate coolant pre-heating systems 16a and 16b (not shown), respectively. Here, each of the coolant pre-heating systems 16a and 16b can be realized by, for example, a coolant pre-heating heater.

That is, with the present invention, it is possible to provide a traction system for railway vehicles using a diesel engine generator traction system. In the traction system for railway vehicles, until the vehicle reaches a predetermined point at which the coolant pre-heating is to be completed (that is, until the vehicle reaches a point at which engine operation with external output is started), the coolant pre-heating can be completed with less energy consumption in such a manner that the time required to pre-heat the coolant to a predetermined temperature value is estimated on the basis of the outside air temperature and the coolant temperature information, and that the pre-heating start point is further determined on the basis of the route information, and then the coolant pre-heating is started at the time when the vehicle passes the pre-heating start point.

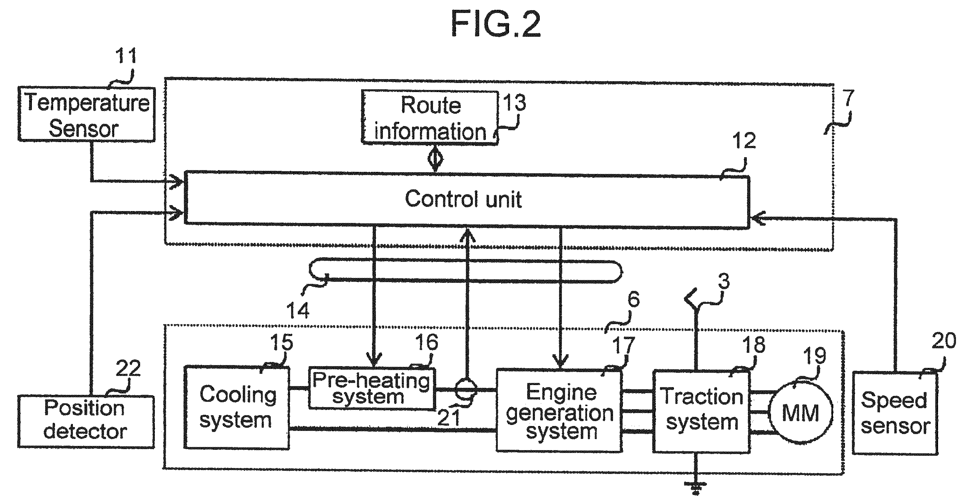

FIG. 2 is a view showing a system configuration of a traction system and a train control and management system according to the embodiment of present invention.

The traction system 6 is configured by an engine cooling system 15, a coolant pre-heating system 16, an engine generation system 17, a power converter 18, a main motor 19, and a coolant temperature sensor 21.

The train control and management system 7 is configured by an information control unit 12 and the information storage unit 13. Further, the information control unit 12 receives ambient outside air temperature Tair from the outside air temperature sensor 11, point passage information Chk_position from the travel position detector 22, and travel speed Vtrain from the travel speed sensor 20. Further, the information control unit 12 transmits, via the information transmission system 14, a coolant pre-heating command Cmd_prht to the coolant pre-heating system 16, and an engine generation control command Cmd_egen to the engine generation system 17. Further, the information control unit 12 receives a coolant temperature detection value Tcool from the coolant temperature sensor 21 via the information transmission system 14.

With the above-described configuration, the information control unit 12 can specify the current travel position P_current by collating the point passage information Chk_position detected by the travel position detector 22 with the route information stored in the information storage unit 13, to specify a point corresponding to the point passage information Chk_position, and further by adding, to the specified point, a time integration value of the travel speed Vtrain detected by the travel speed sensor 20.

Further, on the basis of the ambient outside air temperature Tair detected by the outside air temperature sensor 11, and the coolant temperature detection values Tcool of engine coolant, which are respectively detected by the traction systems 6a and 6b and which are transmitted via the information transmission system 14, the information control unit 12 determines the coolant pre-heating required time T_prht during which the engine coolant of the traction system 6 is heated by the coolant pre-heating system to reach a predetermined temperature. Further, in the information storage unit 13, the point at which the coolant pre-heating is to be completed (or time when the coolant pre-heating is to be completed) is registered beforehand for determination of the pre-heating start point P_prht which enables the coolant pre-heating required time to be secured. When the current travel position P_current reaches the pre-heating start point P_prht, the train control and management system 7 outputs the coolant pre-heating command cmd_prht to the traction system 6. Upon reception of the coolant pre-heating command cmd_prht, the traction system 6 operates the coolant pre-heating system 16.

That is, with the present invention, it is possible to provide a traction system for railway vehicles using a diesel engine generator traction system. In the traction system for railway vehicles, until the vehicle reaches a predetermined point at which the coolant pre-heating is to be completed, the coolant pre-heating can be surely completed with less energy consumption in such a manner that the time required to pre-heat the coolant to a predetermined temperature value is estimated on the basis of the outside air temperature and the coolant temperature information, and that the pre-heating start point is further determined on the basis of the route information, and then the coolant pre-heating is started when the vehicle passes the pre-heating start point.

An object of the present invention is to reduce energy required for controlling the temperature of engine coolant in the case where a common train set directly travels through a section, such as an electrified section, in which vehicle traction is performed without use of engine output, and a section, such as a non-electrified section, in which vehicle traction is performed by use of engine output. For this reason, the present invention can be applied to a case other than the case of the embodiment which, as shown in FIG. 2, operates as an electric railcar in an electrified section, and which, in a non-electrified section, operates as an electric-type diesel railcar using the engine generation system 17, the power converter 18, and the main motor 19.

That is, the present invention can also be applied to a railway vehicle which, in a non-electrified section, operates not as an electric-type diesel railcar but as a mechanical-type diesel railcar. Further, the present invention can also be applied to a railway vehicle which, in an electrified section, does not operate as an electric railcar receiving supply of electric power from a power generation facility on the ground side but operates as an electric railcar with an electric power storage system, such as a battery, mounted therein and receives supply of electric power from the electric power storage system.

FIG. 3 is a view showing an example of a coolant pre-heating curve of the embodiment of the present invention.

The horizontal axis of the graph represents the lapse of time, and the vertical axis represents the temperature of coolant. Three curves T_curve_1, T_curve_2, and T_curve_3 shown in the graph are coolant pre-heating curves, each of which represents a state where, at each of outside air temperatures (Tair) of Ta1, Ta2 and Ta3, the temperature of coolant (Tcool) is increased from Tw0 to Tws with the lapse of time by pre-heating. Reference character Tws denotes the coolant temperature at which engine normal operation (external output operation) is permitted. Here, each of the coolant pre-heating curves is based on the conditions of Ta1 < Ta2 <Ta3 (< Tws). That is, when the coolant temperature is higher than the outside air temperature, heat dissipation to the outside air becomes smaller as the temperature difference between the outside air temperature and the coolant temperature is smaller, and hence the time required for coolant temperature to reach Tws becomes short.

It is assumed that the coolant pre-heating curves are obtained by performing actual measurement by using the actual engine cooling system 15 after the outside air temperature conditions are set. However, the coolant pre-heating curves can also be calculated in such a manner that a coolant circulation system of the engine cooling system 15 is configured by mathematical models, and that a simulation of the coolant circulation system is performed by using outside air temperature conditions as parameters.

Here, a procedure for determining the start timing of coolant pre-heating on the basis of coolant temperature estimation curves will be described by taking, as an example, the case where the coolant temperature (Tcool) is Tw1.

Intersection points of the coolant temperature Tcool = Tw1 with three curves T_curve_1, T_curve_2 and T_curve_3 are denoted as t_11, t_21 and t_31, respectively. That is, for each of the three curves, the coolant pre-heating time t_prht, required for the coolant temperature to reach the coolant temperature Tws from the state of coolant temperature Tw1 is obtained as follows according to the outside air temperature (Tair). Here, time t_0 is a time (time of start of power operation) when the engine completes the coolant pre-heating and starts normal operation.

$$[\text{Expression 1}]$$
$$t\_prht\_1 = t\_0 - t\_11 \ (\text{when Tair} = \text{Ta1})$$
$$t\_prht\_2 = t\_0 - t\_21 \ (\text{when Tair} = \text{Ta2})$$
$$t\_prht\_3 = t\_0 - t\_31 \ (\text{when Tair} = \text{Ta3})$$

The engine can start normal operation (operation with external output) when the coolant temperature reaches Tws. At the time of the coolant temperature Tw1, the coolant pre-heating time t_prht, at which the coolant temperature reaches the coolant temperature Tws, can be expressed by expression 1. Therefore, in order to make the coolant temperature reach Tws at the normal operation start time of t_0, it is only necessary that the coolant pre-heating is started at a time preceding the time t_0 by the time t_prht.

Here, FIG. 3 shows three coolant pre-heating curves T_curve_1, T_curve_2 and T_curve_3 respectively corresponding to three outside air temperatures Ta1, Ta2 and Ta3. This is an example for simply explaining the method of the present invention. A plurality of coolant preheating curves are set at intervals larger than at least the accuracy of measurement of the outside air temperature. For example, when the measurement accuracy of outside air temperature is set to 0.1 °C, and when the coolant temperature pre-heating curves are set in increments of 0.1 °C in such a manner that Ta1 [°C], Ta2 (= Ta1 + 0.1 [°C]), and Ta3 (= Ta2 + 0.1 [°C]), the coolant pre-heating time corresponding to an outside air temperature change can be highly precisely obtained within the range of the measurement accuracy of outside air temperature. Further, it is assumed that each of the coolant pre-heating curves is set as a three-dimensional table in which the coolant temperature is made to correspond to the outside air temperature and the elapsed time. However, it is also possible that each of the coolant pre-heating curves is defined as a two-variable function using the outside air temperature and the elapsed time as parameters.

However, the normal operation start time t_0 is changed according to the travel route, the up and down travel directions, and the train schedule, and hence time data corresponding to each of these conditions become complicated and enormous. Further, the time data need to be updated each time the train schedule is revised. Further, when the train schedule is delayed, the time data themselves become useless, and it is necessary to perform temporary operation, such as operation of manually starting the coolant pre-heating.

To cope with this problem, the present embodiment proposes a method configured such that the timing (of start of power operation) when the engine completes the coolant pre-heating and starts normal operation is defined not on the basis of the time but on the basis of the point (distance in kilometers), such that the point (distance in kilometers), through which the train passes at a time preceding by the coolant pre-heating time t_prht from the time when the train passes the point defined as the engine normal operation start point is defined as a coolant pre-heating start point, and such that the coolant preheating is started when the actual travel position reaches the coolant pre-heating start point. However, the present invention is not limited to the method in which the timing when the engine completes the coolant pre-heating and starts the normal operation is defined by the point (distance in kilometers), but includes also a method in which the timing is defined by the time.

The coolant pre-heating start point is determined on the basis of the coolant pre-heating time t_prht and the route information (operation curve). The operation curve defines a relationship between the distance in kilometers and the speed. On the basis of the relationship between the distance in kilometers and the speed, it is possible to obtain a relationship between the distance in kilometers and the traveling position. That is, it is possible to determine the coolant pre-heating start position by referring to the position, through which the train passes at a time preceding by the time t_prht from the time when the train passes through the normal operation starting point.

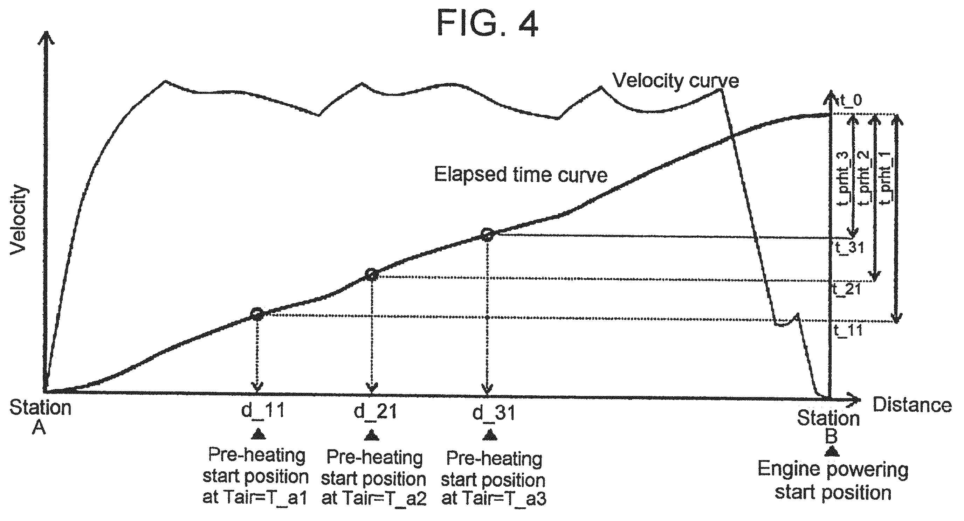

FIG. 4 is a view showing an example of an operation curve for determining the coolant pre-heating start point according to the embodiment of the present invention.

The operation curve means a graph which, for the purpose of planning efficient railway train operation in a railway, is obtained by continuously calculating the elapsed time and the speed according to the change of the travel position. Generally, the operation curve is made in consideration of the situation of lines and equipment, and vehicle performance, and further in consideration of driver operability. The information on the operation curves is stored, for example, in the information storage unit 13.

In FIG. 4, the horizontal axis represents the travel position (distance in kilometers), and the left end shows the position of station A and the right end shows the position of station B. Here, the station B is assumed to be the coolant pre-heating start point. In FIG. 4, two curves are illustrated with respect to the travel position shown as the horizontal axis. One of the two curves is a "velocity curve" (thin curve) with respect to the travel position, and corresponds to the left vertical axis. The other of the two curves is an "elapsed time curve" (thick curve) with respect to the travel position, and corresponds to the right vertical axis.

By using the operation curves, the coolant pre-heating start point corresponding to the coolant pre-heating time t_prht can be determined as follows. When the outside air temperature (Tair) is T_a1, the required coolant pre-heating time (t_prht) can be determined as t_prft_1 on the basis of the coolant pre-heating curve shown in FIG. 3 as described above. When the coolant pre-heating time is t_prht_1, the corresponding pre-heating start point can be determined as d_11 by referring to the "elapsed time curve" of the operation curve. Similarly, when the coolant preheating time is t_prht 2, the pre-heating start point is determined as d_21, and when the coolant preheating time is t_prht_3, the pre-heating start point can be determined as d_31.

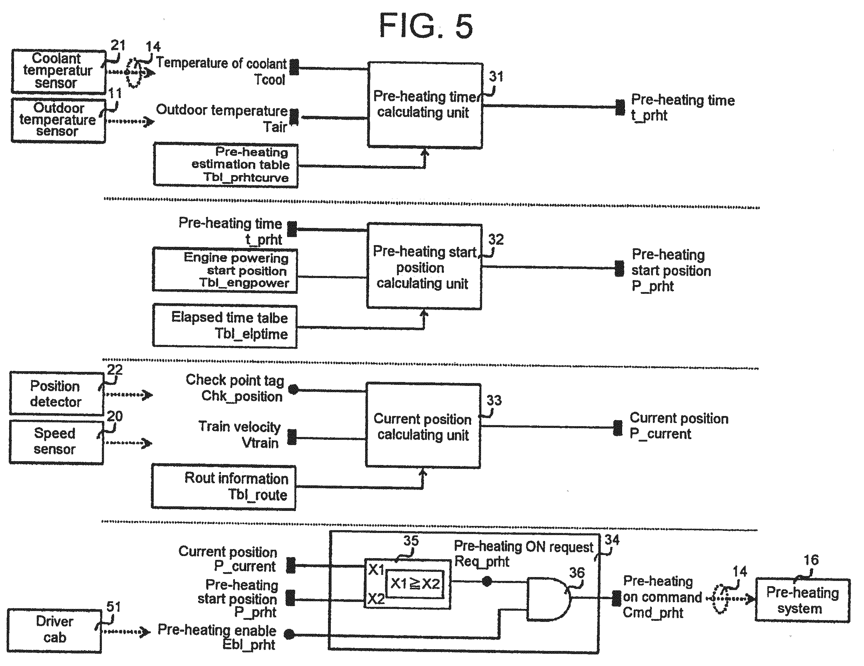

FIG. 5 is a control block diagram showing a procedure for calculating a coolant pre-heating command in the embodiment of the present invention.

A current travel position calculating unit 33 uses, as inputs, the point passage information Chk_position, the travel speed Vtrain, and the route information table Tbl_route, and outputs the present travel position P_current.

By collating the point passage information Chk_position detected by the travel position detector 22, with the route information table Tbl_route stored in the information storage unit 13 provided in the train control and management system, the current travel position calculating unit 33 specifies a point corresponding to the point passage information Chk_position, and further calculates the current travel position P_current by adding, to the specified position, the time integration value of the travel speed Vtrain detected by the travel speed sensor 20.

A coolant pre-heating time calculating unit 31 uses, as inputs, the coolant temperature Tcool, the ambient outside air temperature Tair, and the coolant pre-heating curve table Tbl_prhtcurve, and outputs the coolant pre-heating time t_prht.

On the basis of the ambient outside air temperature Tair detected by the outside air temperature sensor 11, and on the basis of the engine coolant temperature detection value Tcool detected by the coolant temperature sensor 21 and transmitted via the information transmission system 14, and also by referring to the coolant pre-heating curve table Tbl_route stored in the information storage unit 13, the coolant pre-heating time calculating unit 31 calculates the coolant pre-heating time t_prht during which the engine coolant of the traction system 6 is heated by the coolant pre-heating system 16 to reach a predetermined temperature.

A coolant pre-heating start position calculating unit 32 uses, as inputs, the coolant pre-heating time t_prht, the coolant preheating completion point table Tbl_engpower, and the "elapsed time curve" table Tbl_elptime with respect to the travel position, and outputs the coolant pre-heating start point P_prht.

The table Tbl_engpower in which the point where the coolant pre-heating is to be completed is registered beforehand, and the "elapsed time curve" table Tbl_elptime with respect to the travel position are stored in the information storage unit 13.

As described above, the coolant pre-heating start point P_prht can be calculated by tracing back the "elapsed time curve" by the coolant pre-heating time t_prht from the time of reaching the coolant pre-heating completion point.

A coolant pre-heating command calculating unit 34 receives, as inputs, the current travel position P_current, the coolant pre-heating start point P_prht, and the coolant pre-heating enable flag Ebl_prht, and outputs the coolant pre-heating command Cmd_prht.

A comparator 35 compares the current travel position P_current with the coolant pre-heating start point P_Prht, and calculates the coolant pre-heating request Req_prht at the time when the current travel position P_current reaches the coolant pre-heating start point P_Prht. A logical product operation circuit 36 calculates a logical product of the coolant pre-heating request Req_prht and the coolant pre-heating enable flag Fbl_prht for enabling the coolant pre-heating operation selected by operation of a switch provided in a driver cab 51, and generates the coolant pre-heating command Cmd_prht. The coolant pre-heating command Cmd_prht is inputted into the coolant pre-heating system 16 via the information transmission system 14, so that the coolant pre-heating is started.

That is, with the present invention, it is possible to provide a traction system for railway vehicles using a diesel engine generator traction system. In the traction system for railway vehicles, until the vehicle reaches a predetermined point at which the coolant pre-heating is to be completed, the coolant pre-heating can be completed with less energy consumption in such a manner that the time required to pre-heat the coolant to a predetermined temperature value is estimated on the basis of the outside air temperature and the coolant temperature information, and that the pre-heating start point is further determined on the basis of the route information, and then the coolant pre-heating is started when the vehicle passes the pre-heating start point.

[Embodiment 2]

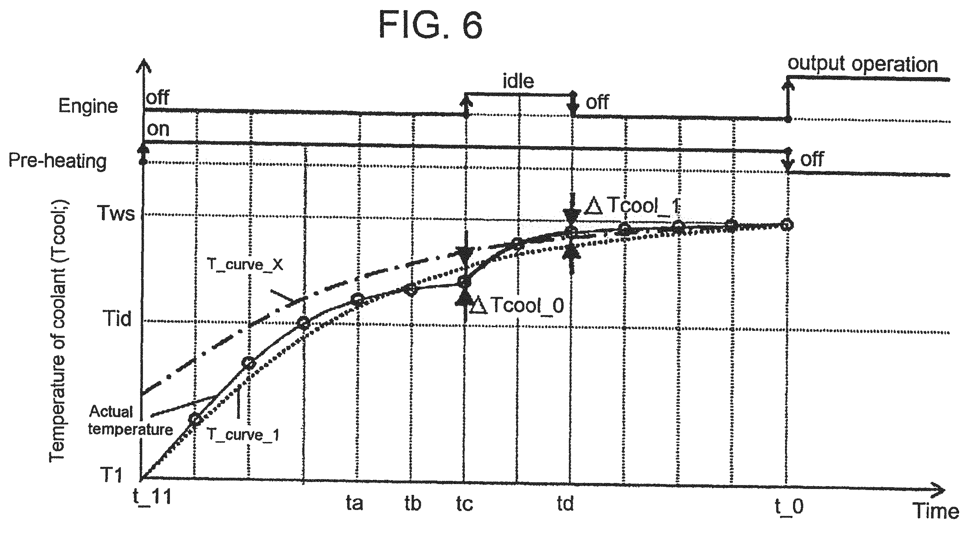

FIG. 6 is a view showing operation of a coolant temperature rise acceleration function which is a second embodiment of the present invention.

Embodiment 1 is configured such that the coolant pre-heating time t_prht is calculated by referring to the coolant preheating curve by using the ambient outside air temperature Tair and the coolant temperature Tcool as parameters, and such that the coolant pre-heating start point P_prht is outputted by using the coolant pre-heating time t_prht as a parameter, and by referring to the coolant pre-heating completion point table Tbl_engpower, and the "elapsed time curve" table Tbl_elptime with respect to the travel position, which tables are stored in the information storage unit 13. That is, at the engine normal operation start time t_0, the coolant temperature Tcool can be made to reach the normal operation coolant temperature Tws permitting the engine normal operation (operation with external output) in such a manner that the coolant pre-heating is started at a time preceding by the coolant pre-heating time t_prht from the engine normal operation start time t_0, or that the coolant pre-heating is started at the time when the travel position of the train reaches the pre-heating start point P_prht.

However, it is also estimated that, after the coolant pre-heating is started, the ambient outside air temperature Tair, which is one of the parameters used for calculating the coolant pre-heating time t_prht, is greatly changed due to a sudden change of the weather, and the like. Particularly, when the ambient outside air temperature Tair drops greatly after the coolant pre-heating is started, the difference between the ambient outside air temperature Tair and the coolant temperature Tcool is increased, so that the increase of the coolant temperature Tcool with respect to the elapsed time becomes smaller than the value estimated from the coolant pre-heating curve. That is, it is considered that, at the engine normal operation start time t_0, the coolant temperature Tcool cannot reach the normal operation coolant temperature Tws, to cause a problem, such as a delay in the train operation.

In order to avoid such situation, the traction system for railway vehicles according to the present invention is provided with not only the coolant heating method based on the coolant pre-heating system described above, but also a coolant temperature rise acceleration function which compensates the rise of coolant temperature by using engine warm-up operation.

FIG. 6 is a time chart showing a state in which the coolant temperature Tcool is increased at the time when the coolant temperature rise acceleration function is operated. The horizontal axis represents the elapsed time (Time), and the vertical axis represents the coolant temperature (Tcool). Further, the vertical axis also represents the operation states of the engine and the coolant pre-heating system.

Now, in order to increase the coolant temperature Tcool to the normal operation coolant temperature Tws according to the coolant pre-heating curve T_curve_1 shown by the dotted line curve until the time t_0, the coolant pre-heating is started at time t_11, and thereby the actual coolant temperature shown by the solid line curve starts to be increased so as to slightly exceed the coolant pre-heating curve T_curve_1. The reason why the actual coolant temperature is increased so as to slightly exceeds the coolant pre-heating curve T_curve_1 is that, in order to make the coolant temperature Tcool surely reach the normal operation coolant temperature Tws at time t_0, the coolant pre-heating curve is set by considering, as an allowance time, variable factors, such as outside air temperature, which can be estimated.

Thereafter, at time tb, the actual coolant temperature Tcool becomes lower than the coolant pre-heating curve T_curve_1. This shows a state in which, as described above, the ambient outside air temperature Tair has greatly dropped due to a sudden change of weather, and the like, and thereby the coolant pre-heating cannot be performed as expected. When this state continues as it is, the coolant temperature Tcool cannot reach the normal operation coolant temperature Tws at the engine normal operation start time t_0. For this reason, when the difference between the coolant pre-heating curve T_curve_1 and the actual coolant temperature Tcool reaches a warm-up pre-heating start coolant temperature difference $\Delta$Tcool_0 set beforehand (tc in FIG. 6), the engine warm-up operation (idling operation) is started. The increase of the coolant temperature is accelerated by the coolant heating effects by the coolant pre-heating system and the engine warm-up operation.

Here, for the purpose of maintenance of the engine, the procedure of the engine warm-up operation is also commonly specified so that the engine warm-up operation is not started until the coolant temperature is increased to a predetermined value Tid. Therefore, the coolant temperature rise acceleration function by the engine warm-up operation is started at the time when the coolant temperature reaches Tid. It is considered that the coolant temperature specification value Tid, at which the engine warm-up operation can be started, is lower than the coolant temperature Tws at which the engine normal operation can be started. For example, in an example of specification of a railway engine of 700 kW class, the Tid is set lower than the Tws by 15°C. For this reason, even in the case where the coolant temperature rise acceleration function based on the engine warm-up operation is started at the time when the coolant temperature reaches Tid, it is possible to obtain at least the effect of accelerating the coolant temperature rise from Tid to Tws.

Next, a method for determining the timing of ending the coolant heating by the engine warm-up operation will be described.

As described above, it is necessary to perform the coolant heating by the engine warm-up operation at the time when the ambient outside air temperature is lowered. Here, it is considered that, in the lowered ambient outside air temperature, the coolant is heated according to a new coolant pre-heating curve. In FIG. 6, the coolant pre-heating curve determined by the lowered ambient outside air temperature is shown by a broken-dotted line denoted as T _curve_X. That is, when the ambient outside air temperature is lowered, it is impossible that, only by the coolant pre-heating system, the coolant temperature is increased to the normal operation water temperature Tws at the time t_0 according to the coolant pre-heating curve T_curve_X corresponding to the lowered outside air temperature. The purpose of the coolant heating function by the engine warm-up operation is to additionally heat the coolant to a state in which the coolant can be heated according to the coolant pre-heating curve T_curve_X only by the coolant pre-heating system.

For this reason, the difference between the actual coolant temperature Tcool and the coolant pre-heating curve T_curve_X newly obtained in correspondence with the present ambient outside air temperature (lowered ambient outside air temperature) is obtained, and then the engine warm-up operation is ended at the time when the obtained difference reaches the warm-up pre-heating start coolant temperature difference ΔTcool_1 set beforehand (td in FIG. 6).

After the engine warm-up operation is ended, the coolant is heated only by the coolant pre-heating system so that the actual coolant temperature Tcool reaches the normal operation coolant temperature Tws until the time t_0.

As described above, in the case where the coolant temperature rise acceleration function is provided, even when the ambient outside air temperature, which is a factor causing fluctuation of the coolant pre-heating time, is changed, the coolant pre-heating can be completed until a predetermined time by using the temperature rise effect by the engine warm-up operation.

That is, with the present embodiment, it is possible to provide a traction system for railway vehicles using a diesel engine generator traction system. In the traction system for railway vehicles, until the vehicle reaches a predetermined point at which the coolant pre-heating is to be completed, the coolant pre-heating can be surely completed with less energy consumption in such a manner that the time required to pre-heat the coolant to a predetermined temperature value is estimated on the basis of the outside air temperature and the coolant temperature information, and that the pre-heating start point is further determined on the basis of the route information, and then the coolant pre-heating is started when the vehicle passes the pre-heating start point.

[Embodiment 3]

In embodiment 1, an example is described in which the coolant pre-heating system 16 controls the start point (or start time) of pre-heating by the coolant pre-heating heater, but it is considered that, in such a case where the coolant pre-heating heater fails, the coolant is pre-heated by the engine warm-up operation so as to increase the temperature of the coolant. In the present embodiment, an example is described in which the engine warm-up operation is used as the operation of the coolant pre-heating system 16. Also when the engine warm-up operation is used as the operation of the coolant pre-heating system 16, the control similar to the control of embodiment 1 can be performed. In this case, it is only necessary that the time required for increasing the coolant temperature to Tws is estimated by replacing the time chart of FIG. 3, showing the increase of the coolant temperature Tcool, with the time chart by the engine warm-up operation.

Further, the coolant pre-heating methods may also be switched in such a manner that the coolant is pre-heated by a heater in the period in which the coolant temperature is increased from a low temperature to a predetermined temperature, and that the coolant is pre-heated by the engine warm-up operation until the coolant temperature is increased from the predetermined temperature to the temperature permitting the engine external output operation. Also in this case, it is only necessary that the time required for the coolant temperature to be increased to Tws is estimated by replacing the time chart of FIG. 3, showing the increase of the coolant temperature Tcool, with the time chart in the case where the pre-heating by the heater is combined with the preheating by the engine warm-up operation.

[Embodiment 4]

In embodiment 1, an example is described in which the pre-heating start point (or pre-heating start time) of the coolant pre-heating system 16 is determined by using the temperature information detected by both the coolant temperature sensor 21 and the outside air temperature sensor 11. However, in the present embodiment, an embodiment, in which the outside air temperature sensor 11 is not used, is described as a simpler embodiment.

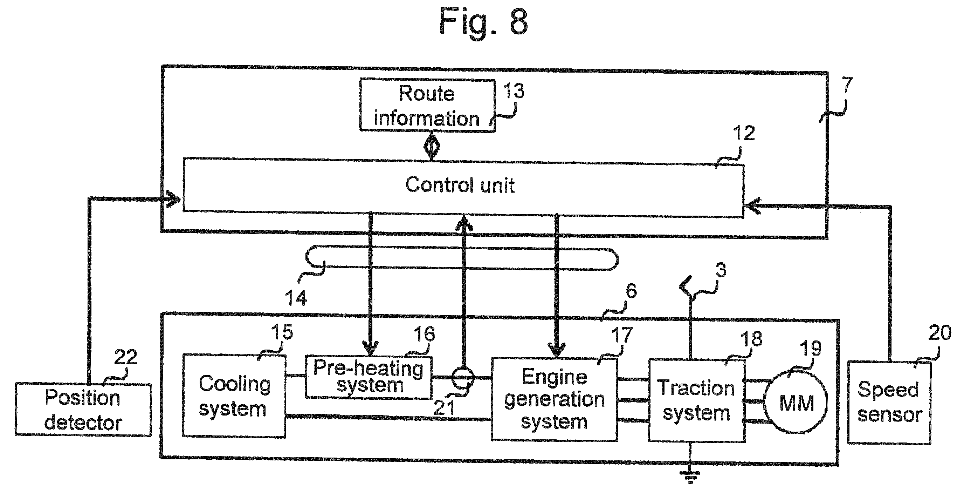

In the following, portions of the present embodiment, which are different from those in embodiment 1, are described. FIG. 8 shows a configuration of a traction system and a train control and management system of the present embodiment. The traction system 6 is configured by the engine cooling system 15, the coolant pre-heating system 16, the engine generation system 17, the power converter 18, the main motor 19, and the coolant temperature sensor 21. The train control and management system 7 is configured by the information control unit 12 and the information storage unit 13.

Further, the information control unit 12 receives the point passage information Chk_position from the travel position detector 22, the travel speed Vtrain from the travel speed sensor 20, and the coolant temperature detection value Tcool from the coolant temperature sensor 21. Further, the information control unit 12 transmits, via the information transmission system 14, the coolant pre-heating command Cmd_prht to the coolant pre-heating system 16, and the engine generation control command Cmd_egen to the engine generation system 17.

On the basis of the engine coolant temperature detection value Tcool detected by each of the traction systems 6a and 6b and transmitted via the information transmission system 14, the information control unit 12 determines the coolant pre-heating required time T_prht during which the engine coolant of the traction system 6 is heated to a predetermined temperature by the coolant pre-heating system.

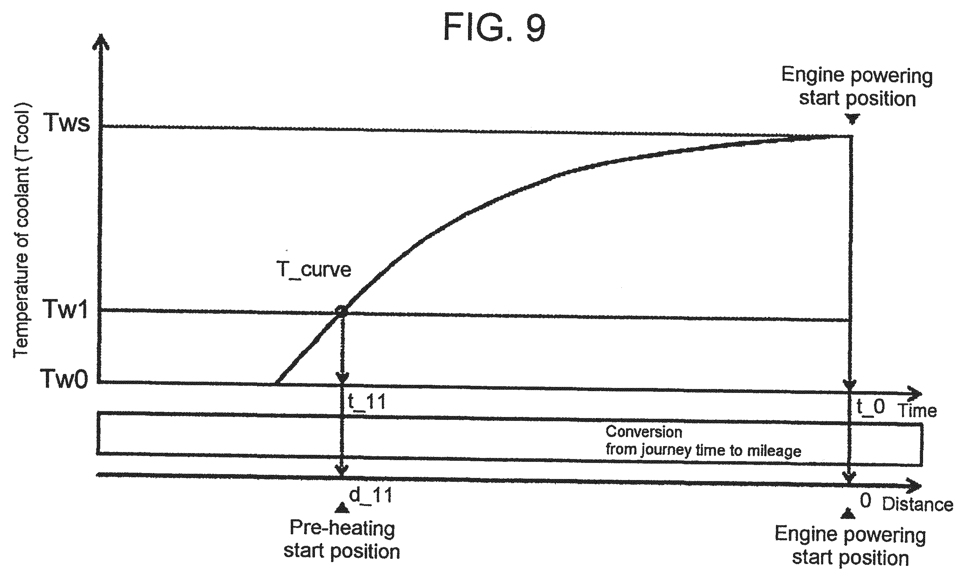

FIG. 9 is a view showing an example of a coolant pre-heating curve in the present embodiment. In the graph, the horizontal axis represents the lapse of time (Time), and the vertical axis represents the coolant temperature (Temperature of Coolant). The graph is a coolant pre-heating curve showing a state in which the coolant temperature (Tcool) is increased from Tw0 to Tws with the lapse of time by the coolant pre-heating.

That is, when the coolant temperature is a relatively high temperature close to Tws, the time required for the pre-heating is short, and hence the pre-heating is started at a point close to the point at which the engine operation with external output is started. On the other hand, when the coolant temperature is a relatively low temperature and greatly lower than Tws, the time required for the preheating is long, and hence the pre-heating is started from a point relatively distant from the point at which the engine operation with external output is started. Therefore, as the coolant temperature becomes lower, the start point of pre-heating by the coolant pre-heating system becomes more distant from the point at which the engine operation with external output is started.

Further, the start of pre-heating can also be controlled not by the "travel position" but by the "time". In this case, when the coolant temperature is a relatively high temperature and close to Tws, the time required for the pre-heating is short, and hence the pre-heating start time is determined so as to relatively reduce the interval between the pre-heating start time and the estimated time when the travel position of the train reaches the point of the start of engine operation with external output. On the other hand, when the coolant temperature is significantly lower than Tws, the time required for the pre-heating is long, and hence the pre-heating start time is determined so that the interval between the pre-heating start time and the estimated time when the travel position of the train reaches the point of the start of engine operation with external output is set to be relatively long. That is, as the coolant temperature becomes low, the pre-heating start time is set so as to increase the interval between the time at which the pre-heating by the coolant pre-heating system is started, and the estimated time of arrival at which the engine operation with external output is started.

Here, as shown in FIG. 3, the rate of increase of the coolant temperature is changed due to the condition of the outside air temperature. Therefore, in order to surely increase the coolant temperature to a predetermined temperature at the point where the engine operation with external output is started, it is desirable that the curve of FIG. 9 is set so as to become a low temperature side curve in FIG. 3.

In the present embodiment, a plurality of time charts, each representing a relationship between the coolant temperature Tcool and the outside air temperature as shown in FIG. 3, cannot be reflected in the control, and hence it is necessary to start the pre-heating by the coolant pre-heating system 16 earlier than in embodiment 1 in order to surely increase the coolant temperature to a predetermined temperature at the point where the engine operation with external output is started. In this way, in the present embodiment, the energy saving effect is lowered as compared with embodiment 1, but the present embodiment can be configured at a lower cost than embodiment 1 because the outside air temperature sensor 11 becomes unnecessary.

**Claims**

1. A traction system for railway vehicles, the traction system being configured to include
    an engine,
    an engine cooling system for cooling the engine,
    a coolant heating system for heating coolant flowing through the engine cooling system,
    a coolant temperature sensor for detecting the temperature of the coolant flowing through the engine cooling system, and
    a power converter for supplying AC power to a motor for vehicle traction by using, as a power source, a ground side power supply facility, or an electric power storage system mounted to the vehicle, or a generator driven by the engine, and

configured to enable the railway vehicle to travel through a section in which the traction of the vehicle is performed without use of engine output and a section in which traction of the vehicle is performed by use of engine output, the traction system comprising:

a travel position detector for detecting travel position information of the railway vehicle;
a control unit for instructing start of heating by the coolant heating system; and
an information storage unit for storing, for each route, point information or time information for the start of engine operation with external output,
wherein, when the railway vehicle travels the section in which the traction of the vehicle is performed without use of engine output, the control unit starts the heating by the coolant heating system, and
the point or the time, at which the heating by the coolant heating system is started, is changed according to the coolant temperature so that, at the point at which the engine starts operation with external output, the coolant temperature reaches a temperature that enables the engine to perform the operation with external output.

2. The traction system for railway vehicles according to claim 1, wherein
when the railway vehicle travels the section in which the traction of the vehicle is performed without use of engine output, the control unit sets the point of starting the heating by the coolant heating system so that, as the coolant temperature becomes low, the point of starting the heating by the coolant heating system becomes more distant from the point of starting the engine operation with external output.

3. The traction system for railway vehicles according to claim 1, wherein
when the railway vehicle travels the section in which the traction of the vehicle is performed without use of engine output, the control unit sets the point of starting the heating by the coolant heating system so that, as the coolant temperature becomes low, an interval between the time of starting the heating by the coolant heating system, and the estimated time of arrival at the point of starting engine operation with external output is increased.

4. The traction system for railway vehicles according to one of claim 2 and claim 3, further comprising
an outside air temperature sensor for measuring ambient outside air temperature of the vehicle,
wherein the information storage unit includes a plurality of pieces of coolant temperature rise curve information used at the time of heating the coolant and respectively corresponding to a plurality of ambient outside air temperatures, and the control unit sets the point of starting the heating by the coolant heating system or the time of starting the heating by the coolant heating system, on the basis of the coolant temperature rise curve information corresponding to the outside air temperature detected by the outside air temperature sensor.

5. The traction system for railway vehicles according to one of claim 2 and claim 4, wherein
the information storage unit includes coolant temperature rise curve information at the time of heating the coolant, and the control unit generates, on the basis of the coolant temperature rise curve information, a time required for the temperature of the coolant to be increased to a predetermined temperature, and determines, on the basis of information on a point of starting engine operation with external output, the point of starting the heating of coolant.

6. The traction system for railway vehicles according to one of claim 3 and claim 4, wherein
the control unit generates, on the basis of the coolant temperature rise curve information, a time required for the temperature of the coolant to be increased to a predetermined temperature, and determines the time of starting the heating by the coolant heating system by subtracting the coolant pre-heating rise time from information on the time of starting engine operation with external output, the information being stored in the information storage unit, and starts the heating of coolant by the coolant heating system at the determined time of starting the heating.

7. The traction system for railway vehicles according to one of claim 5 and claim 6, wherein
the information storage unit includes elapsed time information with respect to the travel position of the railway vehicle, and
the control unit determines the point of starting the heating of coolant or the time of starting of the heating of coolant by, on the basis of the elapsed time information with respect to the travel distance, tracing back the travel position by the time required for the temperature of coolant to be increased to a predetermined temperature, and starts the heating of coolant at the time when the position of the travel position information reaches the point of starting the heating of coolant.

8. The traction system for railway vehicles according to claim 4, wherein
when the ambient outside air temperature is lowered after the time of starting the heating of coolant by the coolant heating system, a second coolant temperature rise curve is selected from the information storage unit by using, as parameters, the lowered ambient outside air temperature and the coolant temperature, and when the difference between the second coolant temperature rise curve and the ambient outside air temperature is larger than a predetermined first threshold value, and when the coolant temperature is larger than a predetermined second threshold value, the control unit instructs the engine to perform idling operation.

9. A railway vehicle comprising the traction system for railway vehicles according to one of claim 1 to claim 8.

**Patentansprüche**

1. Antriebssystem für Schienenfahrzeuge, wobei das Antriebssystem so eingerichtet ist, dass es enthält:

   einen Antrieb,
   ein Antriebskühlsystem zum Kühlen des Antriebs,
   ein Kühlmittelerwärmungssystem zum Erwärmen des durch das Antriebskühlsystem fließenden Kühlmittels,
   einen Kühlmitteltemperatursensor zum Detektieren der Temperatur des durch das Antriebskühlsystem fließenden Kühlmittels, und
   einen Stromwandler zum Versorgen eines Motors zum Fahrzeugantrieb mit Wechselstrom, indem als eine Stromquelle eine bodenseitige Stromversorgungsanlage oder ein am Fahrzeug angebrachtes elektrisches Stromspeichersystem oder ein vom Antrieb betriebener Generator verwendet wird, und
   dazu eingerichtet ist, es dem Schienenfahrzeug zu ermöglichen, einen Abschnitt, in dem der Antrieb des Fahrzeugs ohne Verwendung von Antriebsausstoß ausgeführt wird, und einen Abschnitt, in dem der Antrieb des Fahrzeugs unter Verwendung von Antriebsausstoß ausgeführt wird, zu durchfahren,

   wobei das Antriebssystem umfasst:

   einen Fahrpositionsdetektor zum Detektieren von Fahrpositionsinformationen des Schienenfahrzeugs;
   eine Steuereinheit zum Anweisen des Beginnens des Erwärmens durch das Kühlmittelerwärmungssystem und
   eine Informationsspeichereinheit zum Speichern, für jede Route, von Punktinformationen oder Zeitinformationen für den Beginn des Antriebsvorgangs ohne externen Ausstoß,
   wobei die Steuereinheit, wenn das Schienenfahrzeug den Abschnitt, in dem der Antrieb des Fahrzeugs ohne Verwendung von Antriebsanstoß ausgeführt wird, durchfährt, das Erwärmen durch das Kühlmittelerwärmungssystem beginnt, und
   der Punkt oder die Zeit, bei dem bzw. zu der das Erwärmen durch das Kühlmittelerwärmungssystem begonnen wird, entsprechend der Kühlmitteltemperatur verändert wird, sodass die Kühlmitteltemperatur an dem Punkt, an dem der Antrieb den Betrieb ohne externen Ausstoß beginnt, eine Temperatur erreicht, die es dem Antrieb ermöglicht, den Betrieb ohne externen Ausstoß auszuführen.

2. Antriebssystem für Schienenfahrzeuge nach Anspruch 1, wobei
   die Steuereinheit, wenn das Schienenfahrzeug den Abschnitt, in dem der Antrieb des Fahrzeugs ohne Verwendung von Antriebsausstoß ausgeführt wird, den Punkt des Beginnens des Erwärmens durch das Kühlmittelerwärmungssystem so einstellt, dass sich der Punkt des Beginnens des Erwärmens durch das Kühlmittelerwärmungssystem, wenn die Kühlmitteltemperatur niedrig wird, weiter vom Punkt des Beginnens des Antriebsbetriebs ohne externen Ausstoß entfernt.

3. Antriebssystem für Schienenfahrzeuge nach Anspruch 1, wobei
   die Steuereinheit, wenn das Schienenfahrzeug den Ab-schnitt, in dem der Antrieb des Fahrzeugs ohne Verwendung von Antriebsausstoß ausgeführt wird, durchfährt, den Punkt des Beginnens des Erwärmens durch das Kühlmittelerwärmungssystem so einstellt, dass ein Intervall zwischen der Zeit des Beginnens des Erwärmens durch das Kühlmittelerwärmungssystem und der geschätzten Ankunftszeit am Punkt des Beginnens des Antriebsbetriebs ohne externen Ausstoß, wenn die Kühlmitteltemperatur niedrig wird, vergrößert wird.

4. Antriebssystem für Schienenfahrzeuge nach einem der Ansprüche 2 und 3, ferner umfassend
   einen Außenlufttemperatursensor zum Messen der Außen-luftumgebungstemperatur des Fahrzeugs,
   wobei die Informationsspeichereinheit mehrere Sätze von Kühlmitteltemperatur-Anstiegskurveninformationen enthält, die zur Zeit des Erwärmens des Kühlmittels verwendet werden und jeweils mehreren Außenluftumgebungstemperaturen entsprechen, und

die Steuereinheit den Punkt des Beginnens des Erwärmens durch das Kühlmittelerwärmungssystem oder die Zeit des Beginnens des Erwärmens durch das Kühlmittelerwärmungssystem auf der Grundlage der Kühlmitteltemperatur-Anstiegskurveninformationen, die der vom Außenlufttemperatursensor detektierten Außenlufttemperatur entsprechen, einstellt.

5.  Antriebssystem für Schienenfahrzeuge nach einem der Ansprüche 2 und 4, wobei
die Informationsspeichereinheit Kühlmitteltemperatur-Anstiegskurveninformationen zur Zeit des Erwärmens des Kühlmittels enthält und
die Steuereinheit auf der Grundlage der Kühlmitteltemperatur-Anstiegskurveninformationen einen Zeitraum, der für den Anstieg der Temperatur des Kühlmittels auf eine vorgegebene Temperatur erforderlich ist, bestimmt und auf der Grundlage von Informationen über einen Punkt des Beginnens des Antriebsbetriebs mit externem Ausstoß den Punkt des Beginnens des Erwärmens des Kühlmittels bestimmt.

6.  Antriebssystem für Schienenfahrzeuge nach einem der Ansprüche 3 und 4, wobei
die Steuereinheit auf der Grundlage der Kühlmittel-Anstiegskurveninformationen einen Zeitraum, der für den Anstieg der Temperatur des Kühlmittels auf eine vorgegebene Temperatur erforderlich ist, bestimmt und die Zeit des Beginnens des Erwärmens durch das Kühlmittelerwärmungssystem bestimmt, indem die Kühlmittelvorwärmungs-Anstiegszeit von Informationen über die Zeit des Beginnens des Antriebsbetriebs mit externem Ausstoß abgezogen wird, wobei die Informationen in der Informationsspeichereinheit abgespeichert werden, und das Erwärmen des Kühlmittels durch das Kühlmittelerwärmungssystem zu der bestimmten Zeit des Beginnens des Erwärmens beginnt.

7.  Antriebssystem für Schienenfahrzeuge nach einem der Ansprüche 5 und 6, wobei
die Informationsspeichereinheit Informationen abgelaufener Zeit bezüglich der Fahrposition des Schienenfahrzeugs enthält und
die Steuereinheit den Punkt des Beginnens des Erwärmens des Kühlmittels oder die Zeit des Beginnens des Erwärmens des Kühlmittels bestimmt, indem auf der Grundlage der Informationen abgelaufener Zeit bezüglich der Fahrentfernung die Fahrposition um die für den Anstieg der Temperatur des Kühlmittels auf eine vorgegebene Temperatur erforderliche Zeit zurückverfolgt wird, und das Erwärmen des Kühlmittels zu der Zeit beginnt, wenn die Position der Fahrpositionsinformationen den Punkt des Beginnens des Erwärmens des Kühlmittels erreicht.

8.  Antriebssystem für Schienenfahrzeuge nach Anspruch 4, wobei
wenn die Außenluftumgebungstemperatur nach der Zeit des Beginnens des Erwärmens des Kühlmittels durch das Kühlmit-telerwärmungssystem verringert wird, eine zweite Kühlmitteltemperatur-Anstiegskurve aus der Informationsspeichereinheit ausgewählt wird, indem die verringerte Außenluftumgebungstemperatur und die Kühlmitteltemperatur als Parameter verwendet werden, und wenn die Differenz zwischen der zweiten Kühlmit-teltemperatur-Anstiegskurve und der Außenluftumgebungstempe-ratur größer als ein vorgegebener erster Schwellenwert ist und wenn die Kühlmitteltemperatur größer als ein vorgegebener zweiter Schwellenwert ist, die Steuereinheit den Antrieb anweist, Leerlaufbetrieb auszuführen.

9.  Schienenfahrzeug, das das Antriebssystem für Schienenfahrzeuge nach einem der Ansprüche 1 bis 8 umfasst.

**Revendications**

1.  Système de traction pour véhicules ferroviaires, le système de traction étant configuré pour comprendre :

    un moteur,
    un système de refroidissement de moteur pour refroidir le moteur,
    un système de chauffage de réfrigérant pour chauffer le réfrigérant s'écoulant à travers le système de refroidissement de moteur,
    un capteur de température de réfrigérant pour détecter la température du réfrigérant s'écoulant à travers le système de refroidissement de moteur, et
    un convertisseur de courant pour fournir du courant alternatif à un moteur pour la traction de véhicule en utilisant, en tant que source de courant, une installation d'alimentation électrique du côté de la masse, ou un système de stockage de courant électrique monté sur le véhicule, ou un générateur entraîné par le moteur, et
    configuré pour permettre au véhicule ferroviaire de se déplacer sur une section dans laquelle la traction du véhicule est réalisée sans utiliser la puissance du moteur et une section dans laquelle la traction du véhicule est réalisée en utilisant la puissance du moteur,

le système de traction comprenant :

un détecteur de position de déplacement pour détecter l'information de position de déplacement du véhicule ferroviaire ;

une unité de commande pour donner l'instruction de démarrer le chauffage par le système de chauffage de réfrigérant ; et

une unité de stockage d'information pour stocker, pour chaque parcours, l'information de lieu ou l'information de temps pour le démarrage du fonctionnement du moteur avec une puissance externe,

dans lequel, lorsque le véhicule ferroviaire parcourt la section dans laquelle la traction du véhicule est réalisée sans utiliser la puissance du moteur, l'unité de commande démarre le chauffage par le système de chauffage de réfrigérant, et

le point ou le moment auquel le chauffage par le système de chauffage de réfrigérant est démarré, est modifié selon la température du réfrigérant de sorte que, au point auquel le moteur démarre le fonctionnement avec puissance externe, la température de réfrigérant atteint une température qui permet au moteur de fonctionner avec puissance externe.

2.  Système de traction pour véhicules ferroviaires selon la revendication 1, dans lequel :

lorsque le véhicule ferroviaire parcourt la section dans laquelle la traction du véhicule est réalisée sans l'aide de la puissance du moteur, l'unité de commande détermine le point de démarrage du chauffage par le système de chauffage de réfrigérant de sorte que, lorsque la température du réfrigérant devient basse, le point de démarrage du chauffage par le système de chauffage de réfrigérant devient plus distant du point de démarrage du fonctionnement du moteur avec puissance externe.

3.  Système de traction pour véhicules ferroviaires selon la revendication 1, dans lequel :

lorsque le véhicule ferroviaire parcourt la section dans laquelle la traction du véhicule est réalisée sans l'utilisation de la puissance du moteur, l'unité de commande détermine le point de démarrage du chauffage par le système de chauffage de réfrigérant de sorte que, lorsque la température de réfrigérant devient basse, un intervalle entre le moment de démarrage du chauffage par le système de chauffage de réfrigérant et le moment estimé d'arrivée au point de démarrage du fonctionnement du moteur avec une puissance externe est augmenté.

4.  Système de traction pour véhicules ferroviaires selon l'une des revendications 2 et 3, comprenant en outre :

un capteur de température d'air extérieur pour mesurer la température ambiante de l'air extérieur du véhicule, dans lequel l'unité de stockage d'information comprend une pluralité de pièces d'information de courbe de montée en température de réfrigérant utilisées au moment du chauffage du réfrigérant et correspondant respectivement à une pluralité de températures ambiantes d'air extérieur, et

l'unité de commande détermine le point de démarrage du chauffage par le système de chauffage de réfrigérant ou le moment de démarrage du chauffage par le système de chauffage de réfrigérant, sur la base de l'information de courbe de montée en température de réfrigérant qui correspond à la température de l'air extérieur détectée par le capteur de température d'air extérieur.

5.  Système de traction pour véhicules ferroviaires selon l'une des revendications 2 et 4, dans lequel :

l'unité de stockage d'information comprend l'information de courbe de montée en température de réfrigérant au moment du chauffage du réfrigérant, et

l'unité de commande génère, sur la base de l'information de courbe de montée en température de réfrigérant, un moment requis pour augmenter la température du réfrigérant à une température prédéterminée, et détermine sur la base de l'information concernant un point de démarrage du fonctionnement du moteur avec puissance externe, le point de démarrage du chauffage du réfrigérant.

6.  Système de traction pour véhicules ferroviaires selon l'une des revendications 3 et 4, dans lequel :

l'unité de commande génère, sur la base de l'information de courbe de montée en température de réfrigérant, un moment requis pour augmenter la température du réfrigérant à une température prédéterminée, et détermine le moment de démarrage du chauffage par le système de chauffage de réfrigérant en soustrayant le temps de montée de préchauffage de réfrigérant de l'information concernant le moment de démarrage du fonctionnement du moteur avec puissance externe, l'information étant stockée dans l'unité de stockage d'information, et démarre le chauffage du réfrigérant par le système de chauffage de réfrigérant au moment déterminé de démarrage du chauffage.

7.  Système de traction pour véhicules ferroviaires selon l'une des revendications 5 et 6, dans lequel :

l'unité de stockage d'information comprend l'information de temps écoulé par rapport à la position de déplacement du véhicule ferroviaire, et
l'unité de commande détermine le point de démarrage du chauffage du réfrigérant ou le moment de démarrage du chauffage du réfrigérant en retraçant, sur la base de l'information de temps écoulé par rapport à la distance de déplacement, la position de déplacement par le temps requis pour que la température du réfrigérant augmente jusqu'à une température prédéterminée, , en, et démarre le chauffage du réfrigérant au moment où la position de l'information de position de déplacement atteint le point de démarrage du chauffage du réfrigérant.

8.  Système de traction pour véhicules ferroviaires selon la revendication 4, dans lequel :

lorsque la température ambiante de l'air extérieur est abaissée après le moment de démarrage du chauffage de réfrigérant par le système de chauffage de réfrigérant, une seconde courbe de montée en température de réfrigérant est sélectionnée dans l'unité de stockage d'information en utilisant, en temps que paramètres, la température ambiante d'air extérieur abaissée et la température de réfrigérant, et lorsque la différence entre la seconde courbe de montée en température de réfrigérant et la température ambiante d'air extérieur est supérieure à une première valeur de seuil prédéterminée, et lorsque la température de réfrigérant est supérieure à une seconde valeur de seuil prédéterminée, l'unité de commande donne l'instruction au moteur de fonctionner au ralenti.

9.  Véhicule ferroviaire comprenant le système de traction pour véhicules ferroviaires selon l'une des revendications 1 à 8.

FIG. 1

EP 2 805 862 B1

# FIG.2

EP 2 805 862 B1

FIG. 3

FIG. 4

Velocity curve

Elapsed time curve

Velocity

Distance

Station A

Station B

Engine powering start position

t_0

t_prht_1

t_prht_2

t_prht_3

t_31

t_21

t_11

d_31

Pre-heating start position at Tair=T_a3

d_21

Pre-heating start position at Tair=T_a2

d_11

Pre-heating start position at Tair=T_a1

# FIG. 5

EP 2 805 862 B1

# FIG. 6

EP 2 805 862 B1

# FIG. 7

EP 2 805 862 B1

## Fig. 8

# FIG. 9

EP 2 805 862 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010088145 A

- JP 8198102 A